# EUROPEAN PATENT SPECIFICATION

(11) **EP 3 324 090 B1**
(45) Date of publication and mention of the grant of the patent: **14.08.2019**
(21) Application number: 16306536.0
(22) Date of filing: 22.11.2016
(51) Int. Cl.: F16L 9/04, B22F 3/00, B64C 11/38, F16L 9/06, F16L 9/19, B33Y 80/00, B33Y 10/00, F16L 9/02, B22F 5/10, B22F 3/105

(54) **VARIABLE PITCH PROPELLER WIT TRANSFER TUBE**
VERSTELLPROPELLER MIT ÜBERTRAGUNGSROHR
HÉLICE À PAS VARIABLE AVEC TUBE DE TRANSFERT

(43) Date of publication of application: 23.05.2018
(73) Proprietor: Ratier-Figeac SAS, 46101 Figeac Cedex (FR)
(72) Inventor: FAGES, Christian, 46100 Saint-Felix (FR)
(74) Representative: Dehns

(56) References cited:
- EP-A1- 2 942 489
- US-A- 6 077 040
- US-A1- 2015 226 359

## Description

### Background of the invention

Variable pitch propellers are employed on many different types of vehicles, such as aircraft. Typically, propeller blades are mounted to a rotary hub for pivotable movement about their longitudinal axis to permit pitch adjustment. The pitch adjustment is effected by an hydraulic pitch change actuator housed within the rotating hub assembly. The pitch change actuator is controlled by a flow metering valve such as an electrohydraulic servo valve or direct drive servo valve, which supplies high pressure oil to the pitch change actuator. The flow metering valve is mounted on the static part of the propeller, e.g. the propeller gearbox, and the high pressure hydraulic fluid, e.g. oil, is supplied to the pitch change actuator via a transfer bearing (which interfaces the non-rotatable portion of the propeller with the rotatable portion) and a transfer tube (which may include one or more channels for transferring one or more oil supplies). The transfer tube typically extends into a manifold which has passages for delivering the hydraulic fluid from the transfer tube to the pitch actuation mechanism.

One such variable pitch propeller system, comprising a transfer tube to deliver hydraulic fluid from a transfer bearing to a pitch change actuation mechanism, is described in US 6077040. The preamble of independent claim 1 is based on the variable pitch propeller system disclosed in this document.

Prior art transfer tubes are typically made from many tube portions joined together. It is not uncommon for a transfer tube to be assembled from more than twenty parts. Seals are used to try and prevent leakage between the various assembled parts. However, the seals may not be perfect, or may degrade over time, resulting in leakage of hydraulic fluid.

### Summary

From one aspect, the present disclosure provides a variable pitch propeller comprising a transfer tube, characterised in that: the transfer tube comprises a single piece having at least one channel formed therein for transferring hydraulic fluid; and the transfer tube is an additively manufactured transfer tube integrally formed as one piece.

In embodiments, the transfer tube may comprise a first channel for transferring hydraulic fluid to an increase pitch chamber in a pitch change actuation mechanism of the propeller and a second channel for transferring hydraulic fluid to a decrease pitch chamber in the pitch change actuation mechanism of the propeller. The transfer tube may comprise a third channel for transferring hydraulic fluid to a pitchlock mechanism of the propeller.

In embodiments, the transfer tube may be additively manufactured from titanium or steel. In embodiments, the at least one channel has a portion thereof that does not intersect with an outer surface of the transfer tube.

The transfer tube may further comprise an integrated manifold portion additively manufactured as one piece as part of the transfer tube such that together the integrated manifold portion and the transfer tube comprise a single piece. The manifold portion may comprise exit ports for directing fluid in the channel(s) to a pitch change actuation mechanism.

The transfer tube may comprise exit ports for directing fluid in the channel(s) to a manifold.

In embodiments, the above described exit ports in the manifold portion or exit ports in the transfer tube may be perpendicular to the longitudinal axis of the transfer tube.

In embodiments, at least a portion of the transfer tube between each end may be accordion-shaped in the longitudinal direction to provide flexibility, preferably comprising zig-zag bends or corrugations.

The transfer tube may be arranged to transfer hydraulic fluid via the channel(s) therein from a flow metering valve to a pitch change actuation mechanism. The disclosure further extends to an aircraft comprising a variable pitch propeller as defined in any preceding statement.

The present disclosure also provides a method of manufacturing the variable pitch propeller as defined in any of the preceding statements, the transfer tube having at least one channel for transferring hydraulic fluid, comprising integrally forming the transfer tube as one piece by an additive

The additive manufacturing process may comprise at least one of: selective laser sintering, selective laser melting, direct metal deposition, direct metal laser sintering, direct metal laser melting and electron beam melting.

In embodiments, the method of manufacturing the transfer tube may further comprise additively manufacturing an integrated manifold portion as part of the transfer tube. In embodiments, the method may comprise manufacturing exit ports in the transfer tube or the integrated manifold portion at a direction perpendicular to the longitudinal axis of the transfer tube.

### Brief description of the drawings

Preferred embodiments of the present disclosure will now be described by way of example only and with reference to the accompanying drawings, in which:
Figure 1 illustrates a transfer tube according to a first embodiment of the present disclosure;
Figure 2 illustrates a transfer tube according to a second embodiment of the present disclosure;
Figure 3 illustrates the portion B of the transfer tube marked with a circle in Figure 1, but modified to have an accordion-shape;
Figure 4a shows a simplified cross-section of channels of a transfer tube arranged side by side; and
Figure 4b shows a simplified cross-section of channels of a transfer tube arranged to overlap.

### Detailed description

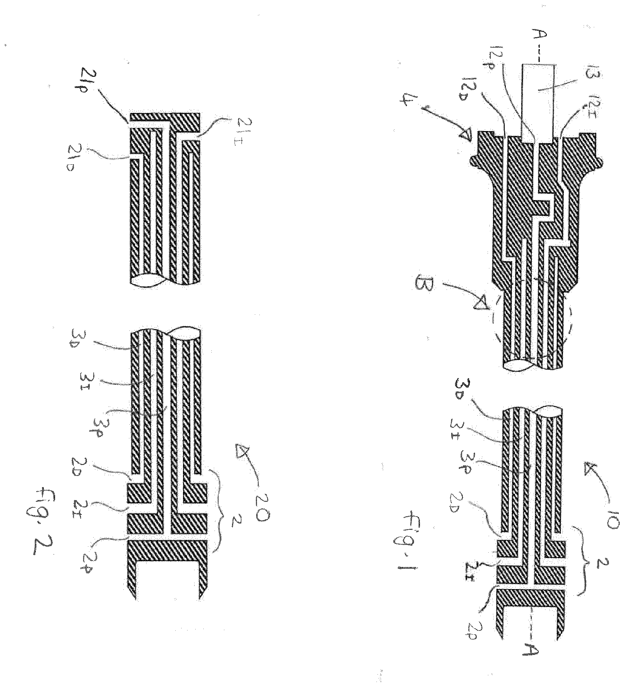

A first embodiment of a transfer tube 10 for a variable pitch propeller according to the present disclosure is illustrated in Figure 1. Each end of the transfer tube 10 is shown, but the central portion is omitted for ease of representation.

The transfer tube 10 comprises feed holes 2 (input ports) and has channels 3 formed therein. Specifically, it comprises increase pitch feed holes 2_{I} through which hydraulic fluid can be provided to increase pitch channels 3_{I}; decrease pitch feed holes 2_{D} through which hydraulic fluid can be provided to decrease pitch channels 3_{D}; and pitchlock feed holes 2_{P} through which hydraulic fluid can be provided to pitchlock channel 3_{P}. Channels 3 may alternatively be referred to as pipes.

The transfer tube comprises an integrated manifold portion 4 having exit holes 12 (which may also be termed exit ports or exit channels). Specifically, it comprises increase pitch exit hole 12_{I} and decrease pitch exit hole 12_{D} at the end of the manifold. The pitchlock channel 3_{P} has an exit hole 12_{P} that communicates with a tube 13. Tube 13 directs the fluid to a pitchlock mechanism. In use when installed in a variable pitch propeller, a transfer bearing (not shown) provides hydraulic fluid (e.g. oil) to the three feed holes 2_{I}, 2_{D} and 2_{P}. The manifold portion 4 carries hydraulic fluid to the pitch change actuation mechanism by redirecting hydraulic fluid in the channels 3 via exit holes 12_{I}, 12_{D} and 12_{P} to the increase pitch and decrease pitch chambers of a pitch change actuator and to the pitchlock mechanism (via tube 13) of the propeller respectively. The pitchlock mechanism may be considered as part of the pitch change actuation mechanism. These mechanisms are well known and will not be described in further detail here.

The transfer tube 10 is formed as a single piece, i.e. is integrally formed, for example comprises no joints, using additive manufacturing methods and thus may be considered as an additively manufactured transfer tube. Thus, the transfer tube 10 may be considered as "seamless". This offers significant advantages over prior art transfer tubes. As described above, prior art transfer tubes are made from many tube portions joined together and leakage can occur if seals are imperfect between the various assembled parts. By forming the transfer tube 10 integrally as one piece by additive manufacturing, there are no joints between assembled parts and thus there can be no risk of leakage. Furthermore, it removes the need for the manufacture and assembly of individual component parts and so manufacture is quicker and cheaper. It also avoids points of structural weakness caused by connections between component parts in the prior art.

In addition to the transfer tube comprising a single piece, various other structural differences may result from the transfer tube being an additively manufactured transfer tube. For example, at least one channel may have a portion thereof that does not intersect with an outer surface of the transfer tube.

A further advantage concerns the sizing of the channels 3. In the prior art, the requirement for seals between pipe joints requires a minimum pipe diameter in order for the seals to work. However, in the transfer tube 10 of the present disclosure, since no joints exist and thus no seals are required, no minimum pipe (channel) diameter is set as a result of seals. Consequently, the diameter of the channels (pipes) can be optimised based on the requirements of the particular propeller rather than being limited by the seals. As a result, the channels can be made with a smaller diameter than in the prior art, reducing the size and therefore the weight and cost of the transfer tube. Furthermore, the overall quantity of circulating hydraulic fluid required will be less, resulting in a further weight and cost saving.

Yet another advantage of the transfer tube being additively manufactured concerns the exit holes 12. Whilst the exit holes 12 are illustrated in Figure 1 as exiting the transfer tube axially, i.e. at the end of the transfer tube 10, in another embodiment the exit holes 12 are perpendicular to the axis A-A of the transfer tube 10. This prevents the generation of axial loads due to pressure, i.e. prevents the generation of unbalanced axial forces between the transfer tube and other components of the propeller which may result if the exit holes 12 are at the end of the transfer tube 10. The additive manufacturing process enables the transfer tube 10 to be manufactured in this way to have exit holes 12 at 90° to the axis A-A and channels 3, in a single part, without the requirement for plugs.

The transfer tube 10 may be additively manufactured from titanium or steel. It may also be additively manufactured from more than one material. For example a hard surface may be required at the extremity of the transfer tube to avoid wear, thus a hard material should be used for the outer portions of the transfer tube, whilst a less hard material such as aluminium could be used for the inner parts. This is possible through additive manufacturing.

In the above described embodiment the transfer tube comprises an integrated manifold portion 4 formed as part of the transfer tube during the additive manufacturing process (i.e. the integrated manifold portion 4 and the transfer tube comprise one piece). This is advantageous since it avoids the need for the transfer tube to be assembled with a separate manifold, thus saving time and cost. However in other embodiments, a manifold portion is not integrated with the transfer tube. Rather, the transfer tube is additively manufactured, and is then connected to a separate manifold. Such an embodiment is illustrated in Figure 2.

In the second embodiment of Figure 2, the transfer tube 20 comprises feed holes 2 and channels 3 just as in the first embodiment. Specifically, it comprises increase pitch feed holes 2_{I} through which hydraulic fluid can be provided to increase pitch channels 3_{I}; decrease pitch feed holes 2_{D} through which hydraulic fluid can be provided to decrease pitch channels 3_{D}; and pitchlock feed holes 2_{P} through which hydraulic fluid can be provided to pitchlock channel 3_{P}, just as in the first embodiment. Also, just as in the first embodiment, the transfer tube 20 is formed as a single piece, i.e. is integrally formed, using additive manufacturing methods, and consequently has all the advantages associated therewith. However, instead of having an integrated manifold portion 4 as in the first embodiment, the fluid in the channels 3_{I}, 3_{D} and 3_{P} exits the transfer tube 20 at exit ports 21_{I}, 21_{D} and 21_{P}, and then enters a separate manifold (not shown). In this embodiment, the exit ports 21 are perpendicular to the axis of the transfer tube 20. This prevents the generation of axial loads due to pressure, i.e. prevents the generation of unbalanced axial forces between the transfer tube and other components of the propeller which may result if the exit holes 21 are at the end of the transfer tube 10. The additive manufacturing process enables the transfer tube 20 to be manufactured in this way to have exit holes 21 at 90° to both the axis and channels 3, in a single part, without the requirement for plugs.

In some situations the integrated manifold configuration of the first embodiment may be more desirable as being simpler and requiring less separate parts, but there may be situations in which a separate manifold portion is more desirable.

If a transfer tube 10, 20 according to embodiments of the disclosure is to be fitted in an existing space in a propeller, and the transfer tube 10, 20 is advantageously made with a smaller diameter than the existing space in the propeller due to being additively manufactured, then ribs (for example made of steel) may be added to the outside of the transfer tube so that the transfer tube fits in the existing space. Such ribs also reinforce the transfer tube.

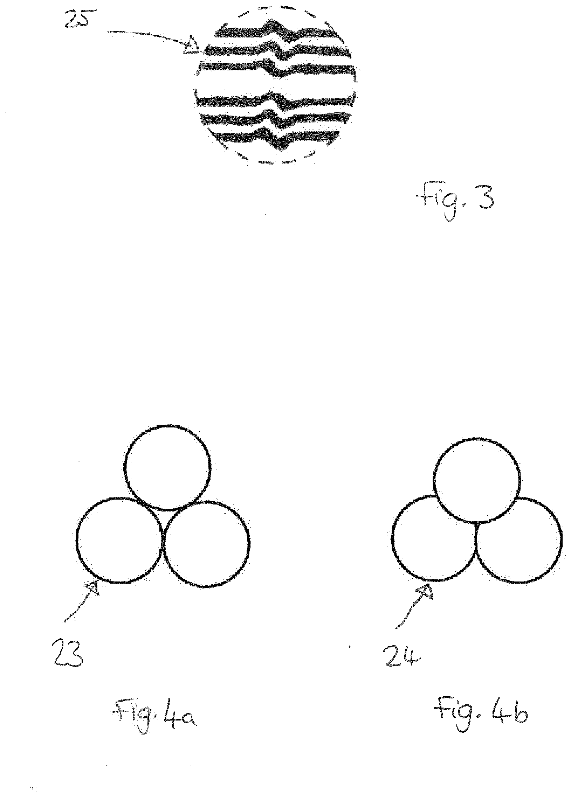

In each of the illustrated embodiments, the main portion of the transfer tube having the channels 3 (and including the omitted central portion) is straight. However, in other embodiments, it may be "accordion-shaped" (e.g. concertina-shaped) to provide some flexibility to allow for deflection of the transfer tube 1. An example of this is shown in Figure 3, which is an enlarged view of the portion B marked with a circle in Figure 1 but modified to have an accordion-shape 25. As can be seen, in this modified example, the tube incorporates zig-zag bends 25 (which may also be termed corrugations) which provide flexibility. Flexibility is useful, for example, to allow for misalignment between the propeller shaft and gearbox connected by the transfer tube.

Whilst in the illustrated embodiments the channels 3 are arranged concentrically, in other embodiments they may be arranged side by side in order to optimise the volume : weight ratio, and reduce cost. Figure 4a is a simplified sectional view of channels 23 of a transfer tube (e.g. increase pitch, decrease pitch and pitchlock) arranged side by side. In other embodiments the channels may be joined together, as shown for example in Figure 4b which is a simplified sectional view of channels 24 of a transfer tube which are joined together.

It will be appreciated that where feed holes (input ports) 2 are referred to, in some embodiments these may alternatively be exit holes (exit ports). Similarly, where exit holes (ports) 12 are referred to, these may alternatively be feed holes (input ports).

Regarding the manufacture of the transfer tube 10 by additive manufacturing, it will be appreciated by the skilled person that the term "additive manufacturing" may describe a process where an additive manufacturing system builds up a part or parts in a layer-by-layer fashion. For example, for each layer, the additive manufacturing system may spread and compact a layer of additive manufacturing material (e.g., metal powder and/or non-metal powder) and solidify one or more portions of this material layer with an energy beam; e.g., a laser beam or an electron beam. The process may be repeated thousands of times until a finished three dimensional part is produced.

Any suitable known additive manufacturing process may be used for the manufacture of the transfer tube of the present disclosure. For example, the additive manufacturing process may comprise at least one of: selective laser sintering, selective laser melting, direct metal deposition, direct metal laser sintering, direct metal laser melting and electron beam melting. Since the transfer tube is produced in a continuous process in the additive manufacturing method, features associated with conventional manufacturing processes such as machining, forging, welding, casting etc. are eliminated thus resulting in savings in cost, material and time. The skilled person would appreciate that a process may be selected based on the geometry of the transfer tube to be manufactured.

While the apparatus and methods of the subject disclosure have been shown and described with reference to embodiments, those skilled in the art will readily appreciate that changes and/or modifications may be made thereto without departing from the scope of the subject disclosure.

## Claims

1. A variable pitch propeller comprising a transfer tube (10, 20), **characterised in that**:
the transfer tube comprises a single piece having at least one channel (3) formed therein for transferring hydraulic fluid; and
the transfer tube is an additively manufactured transfer tube integrally formed as one piece.

2. A propeller as claimed in claim 1, wherein the transfer tube comprises a first channel (3_{I}) for transferring hydraulic fluid to an increase pitch chamber in a pitch change actuation mechanism of the propeller and a second channel (3_{D}) for transferring hydraulic fluid to a decrease pitch chamber in the pitch change actuation mechanism.

3. A propeller as claimed in claim 2, wherein the transfer tube comprises a third channel (3_{P}) for transferring hydraulic fluid to a pitchlock mechanism of the propeller.

4. A propeller as claimed in any preceding claim, wherein the transfer tube is additively manufactured from titanium or steel; and/or wherein the at least one channel (3) has a portion thereof that does not intersect with an outer surface of the transfer tube.

5. A propeller as claimed in any preceding claim, wherein the transfer tube further comprises an integrated manifold portion (4) additively manufactured as one piece as part of the transfer tube such that together the integrated manifold portion and the transfer tube comprise a single piece.

6. A propeller as claimed in claim 5, wherein the manifold portion (4) comprises exit ports (12) for directing fluid in the channel(s) (3) to a pitch change actuation mechanism of the propeller.

7. A propeller as claimed in any of claims 1 to 4, wherein the transfer tube comprises exit ports (21) for directing fluid in the channel(s) (3) to a manifold.

8. A propeller as claimed in claim 6 or 7, wherein the exit ports in the manifold portion or exit ports (21) in the transfer tube are perpendicular to the longitudinal axis of the transfer tube.

9. A propeller as claimed in any preceding claim, wherein at least a portion of the transfer tube between each end is accordion-shaped (25) in the longitudinal direction to provide flexibility, preferably comprising zig-zag bends or corrugations.

10. A variable pitch propeller as claimed in any preceding claim, wherein the transfer tube is arranged to transfer hydraulic fluid via the channel(s) (3) therein from a flow metering valve to a pitch change actuation mechanism.

11. An aircraft comprising the variable pitch propeller as claimed in any preceding claim.

12. A method of manufacturing the variable pitch propeller as claimed in claim 1, the transfer tube having at least one channel (3) for transferring hydraulic fluid, comprising integrally forming the transfer tube as one piece by an additive manufacturing process.

13. A method of manufacturing as claimed in claim 12, wherein the additive manufacturing process comprises at least one of: selective laser sintering, selective laser melting, direct metal deposition, direct metal laser sintering, direct metal laser melting and electron beam melting.

14. A method of manufacturing as claimed in claim 12 or 13, further comprising additively manufacturing an integrated manifold portion (4) as part of the transfer tube.

15. A method of manufacturing as claimed in claim 12, 13 or 14, further comprising manufacturing exit ports (21) in the transfer tube or the integrated manifold portion (4) at a direction perpendicular to the longitudinal axis of the transfer tube.

## Patentansprüche

1. Verstellpropeller, umfassend ein Übertragungsrohr (10, 20), **dadurch gekennzeichnet, dass**:
das Übertragungsrohr ein einziges Stück umfasst, das mindestens einen Kanal (3), der darin zum Übertragen von Hydraulikflüssigkeit ausgebildet ist, aufweist; und
das Übertragungsrohr ein additiv gefertigtes Übertragungsrohr ist, das integral als ein Stück ausgebildet ist.

2. Propeller nach Anspruch 1, wobei das Übertragungsrohr einen ersten Kanal (3_{I}) zum Übertragen von Hydraulikflüssigkeit zu einer Kammer zur Anstellwinkelvergrößerung in einem Betätigungsmechanismus für die Anstellwinkeländerung des Propellers und einen zweiten Kanal (3_{D}) zum Übertragen von Hydraulikflüssigkeit zu einer Kammer zur Anstellwinkelverkleinerung in dem Betätigungsmechanismus für die Anstellwinkeländerung umfasst.

3. Propeller nach Anspruch 2, wobei das Übertragungsrohr einen dritten Kanal (3_{P}) zum Übertragen von Hydraulikflüssigkeit zu einem Anstellwinkelarretierungsmechanismus des Propellers umfasst.

4. Propeller nach einem der vorstehenden Ansprüche, wobei das Übertragungsrohr additiv aus Titan oder Stahl gefertigt ist; und/oder wobei der mindestens eine Kanal (3) einen Abschnitt davon aufweist, der sich nicht mit einer Außenfläche des Übertragungsrohrs schneidet.

5. Propeller nach einem der vorstehenden Ansprüche, wobei das Übertragungsrohr ferner einen integrierten Verteilerabschnitt (4) umfasst, der additiv als ein Stück als Teil des Übertragungsrohrs gefertigt ist, so dass der integrierte Verteilerabschnitt und das Übertragungsrohr zusammen ein einziges Stück umfassen.

6. Propeller nach Anspruch 5, wobei der Verteilerabschnitt (4) Auslassöffnungen (12) umfasst, um Flüssigkeit in dem Kanal/den Kanälen (3) zu einem Betätigungsmechanismus für die Anstellwinkeländerung des Propellers zu leiten.

7. Propeller nach einem der Ansprüche 1 bis 4, wobei das Übertragungsrohr Auslassöffnungen (21) umfasst, um Flüssigkeit in dem Kanal/den Kanälen (3) zu einem Verteiler zu leiten.

8. Propeller nach einem der Ansprüche 6 oder 7, wobei die Auslassöffnungen in dem Verteilerabschnitt oder Auslassöffnungen (21) in dem Übertragungsrohr senkrecht zur Längsachse des Übertragungsrohrs stehen.

9. Propeller nach einem der vorstehenden Ansprüche, wobei mindestens ein Teil des Übertragungsrohrs zwischen den jeweiligen Enden in Längsrichtung ziehharmonikaförmig (25) ist, um Flexibilität bereitzustellen, wobei es vorzugsweise Zickzackbögen oder Wellungen umfasst.

10. Verstellpropeller nach einem der vorstehenden Ansprüche, wobei das Übertragungsrohr angeordnet ist, um Hydraulikflüssigkeit über den Kanal/die Kanäle (3) darin von einem Durchflussmessventil zu einem Betätigungsmechanismus für die Anstellwinkeländerung zu übertragen.

11. Luftfahrzeug, umfassend den Verstellpropeller nach einem der vorstehenden Ansprüche.

12. Verfahren zum Herstellen des Verstellpropellers nach Anspruch 1, wobei das Übertragungsrohr mindestens einen Kanal (3) zum Übertragen von Hydraulikflüssigkeit aufweist, umfassend das integrale Ausbilden des Übertragungsrohrs als ein Stück durch ein Verfahren der additiven Fertigung.

13. Herstellungsverfahren nach Anspruch 12, wobei das Verfahren der additiven Fertigung mindestens eines der Folgenden umfasst: selektives Lasersintern, selektives Laserschmelzen, direkte Metallabscheidung, direktes Metall-Lasersintern, direktes Metall-Laserschmelzen und Elektronenstrahlschmelzen.

14. Herstellungsverfahren nach Anspruch 12 oder 13, ferner umfassend das additive Fertigen eines integrierten Verteilerabschnitts (4) als Teil des Übertragungsrohrs.

15. Herstellungsverfahren nach Anspruch 12, 13 oder 14, ferner umfassend das Herstellen von Auslassöffnungen (21) in dem Übertragungsrohr oder dem integrierten Verteilerabschnitt (4) in einer Richtung, die senkrecht zur Längsachse des Übertragungsrohrs ist.

## Revendications

1. Hélice à pas variable comprenant un tube de transfert (10, 20), **caractérisée en ce que** :
le tube de transfert comprend une seule pièce comportant au moins un canal (3) formé dans celle-ci pour transférer du fluide hydraulique ; et
le tube de transfert est un tube de transfert fabriqué par addition, formé intégralement d'un seul tenant.

2. Hélice selon la revendication 1, dans laquelle le tube de transfert comprend un premier canal (3_{I}) pour transférer le fluide hydraulique jusqu'à une chambre d'augmentation de pas dans un mécanisme d'actionnement de changement de pas de l'hélice et un deuxième canal (3_{D}) pour transférer le fluide hydraulique jusqu'à une chambre de réduction de pas dans le mécanisme d'actionnement de changement de pas.

3. Hélice selon la revendication 2, dans laquelle le tube de transfert comprend un troisième canal (3_{P}) pour transférer le fluide hydraulique jusqu'à un mécanisme de verrouillage de pas de l'hélice.

4. Hélice selon une quelconque revendication précédente, dans laquelle le tube de transfert est fabriqué par addition à partir de titane ou d'acier ; et/ou dans laquelle l'au moins un canal (3) comporte une partie qui ne croise pas une surface externe du tube de transfert.

5. Hélice selon une quelconque revendication précédente, dans laquelle le tube de transfert comprend en outre une partie collecteur intégrée (4), fabriquée par addition d'un seul tenant et faisant partie du tube de transfert, de sorte que la partie collecteur intégrée et le tube de transfert constituent ensemble une seule pièce.

6. Hélice selon la revendication 5, dans laquelle la partie collecteur (4) comprend des orifices de sortie (12) pour diriger le fluide dans le ou les canaux (3) jusqu'à un mécanisme d'actionnement de changement de pas de l'hélice.

7. Hélice selon l'une quelconque des revendications 1 à 4, dans laquelle le tube de transfert comprend des orifices de sortie (21) pour diriger le fluide dans le ou les canaux (3) jusqu'à un collecteur.

8. Hélice selon la revendication 6 ou 7, dans laquelle les orifices de sortie dans la partie collecteur ou les orifices de sortie (21) dans le tube de transfert sont perpendiculaires à l'axe longitudinal du tube de transfert.

9. Hélice selon une quelconque revendication précédente, dans laquelle au moins une partie du tube de transfert entre chaque extrémité est en forme d'accordéon (25) dans le sens longitudinal pour conférer une flexibilité, comprenant de préférence des courbures ou des cannelures en zigzag.

10. Hélice à pas variable selon une quelconque revendication précédente, dans laquelle le tube de transfert est agencé pour transférer le fluide hydraulique via le ou les canaux (3) dans celui-ci depuis une vanne de mesure de débit jusqu'à un mécanisme d'actionnement de changement de pas.

11. Aéronef comprenant l'hélice à pas variable selon une quelconque revendication précédente.

12. Procédé de fabrication de l'hélice à pas variable selon la revendication 1, le tube de transfert comportant au moins un canal (3) pour transférer le fluide hydraulique, comprenant la formation intégrale du tube de transfert d'un seul tenant par un procédé de fabrication additive.

13. Procédé de fabrication selon la revendication 12, dans lequel le procédé de fabrication additive comprend au moins l'un du frittage sélectif au laser, de la fusion sélective au laser, du dépôt direct de métal, du frittage direct de métal au laser, de la fusion directe de métal au laser et de la fusion au faisceau d'électrons.

14. Procédé de fabrication selon la revendication 12 ou 13, comprenant en outre la fabrication additive d'une partie collecteur intégrée (4) faisant partie du tube de transfert.

15. Procédé de fabrication selon la revendication 12, 13 ou 14, comprenant en outre la fabrication d'orifices de sortie (21) dans le tube de transfert ou dans la partie collecteur intégrée (4) perpendiculairement à l'axe longitudinal du tube de transfert.
